**Europäisches Patentamt**

**European Patent Office**

**Office européen des brevets**

(19)

(11) Publication number: **0 080 367**
**B1**

(12) # EUROPEAN PATENT SPECIFICATION

(45) Date of publication of patent specification: **06.05.87**

(51) Int. Cl.⁴: **G 01 J 5/00**

(21) Application number: **82306227.8**

(22) Date of filing: **23.11.82**

(54) **Measuring temperature of hot gases.**

(30) Priority: **25.11.81 US 324973**
**09.09.82 US 416291**

(43) Date of publication of application:
**01.06.83 Bulletin 83/22**

(45) Publication of the grant of the patent:
**06.05.87 Bulletin 87/19**

(84) Designated Contracting States:
**BE CH DE FR GB IT LI NL**

(56) References cited:
**US-A-4 172 383**

(73) Proprietor: **Exxon Research and Engineering Company**
**P.O.Box 390 180 Park Avenue**
**Florham Park New Jersey 07932 (US)**

(72) Inventor: **Stein, Alexander**
**610 Sanderling Court**
**Secaucus New Jersey (US)**

(74) Representative: **Pitkin, Robert Wilfred et al**
**ESSO Engineering (Europe) Ltd. Patents &**
**Licences Apex Tower High Street**
**New Malden Surrey KT3 4DJ (GB)**

Courier Press, Leamington Spa, England.

## Description

The present invention relates to apparatus and a method for measuring the average temperature of hot gases. In particular, though not exclusively, the invention relates to temperature measurement of hot gases in fired furnaces.

By way of background interest to the present invention, reference is directed to U.S. Patent 4,127,383 (T. Iuchi, assigned to Nippon Steel Corporation) which relates to the simultaneous measurement of both the temperature and emissivity of a heated surface. A black body furnace and a radiation pyrometer are spaced from each other in the direction of the surface of the heated material in specular symmetry to a line normal to the heated surface. The black body furnace may include a heater for maintaining the temperature of its inner wall constant. The wavelength band of the detector of the pyrometer is preselected such that the heated surface shows specular reflection characteristics in the band. The radiation energy emitted from the black body furnace is changed and the radiation energy is detected by the pyrometer both before and after that change. At the same time, the temperature of the black body furnace is measured, for example by means of a second pyrometer. From the two detected radiation energy values and the measured furnace temperature, the emissivity and temperature of the heated surface can be calculated.

Reference is also directed to the fact that the flue gas temperature in the transition zone between radiant and convection section of a fired furnace is a relative measure of the heat release in the radiant section. In order to mainain a proper balance of heat release between radiant and convection section and also to protect the metal tubes in the convection section from overheating, one must monitor the flue gas temperature in the transition zone. Generally, this is done by thermocouples at the refractory wall near the transition zone. While this measurement gives some indication of gas temperature, a direct measurement of the flue gas temperature in the transition zone, averaged over the length of the furnace, is preferable.

According to the invention from one aspect there is provided apparatus for performing a temperature measurement on a hot gas, characterised by a black body positioned to be in thermal contact with said gas, thermometer means for measuring the physical temperature of said black body, a spectral pyrometer means situated so as to be capable of viewing said black body through said gas for measuring the radiation temperature of said black body, electronic means arranged for comparing the physical temperature of said black body as measured by said thermometer with the radiation temperature measured by said spectral pyrometer, and heating means for adjusting the physical temperature of said black body until the measured physical and radiation temperatures are substantially the same, said radiation temperature then being representative of the temperature of the gas.

According to the invention from another aspect there is provided a method for performing a temperature measurement on a hot gas, characterised by:

(a) providing a black body in thermal contact with said gas;

(b) measuring the radiation temperature of said black body through the gas with a spectral pyrometer of a selected operating wavelength;

(c) measuring the physical temperature of the black body independent of said pyrometer; and

(d) heating the black body until its radiation temperature as measured with said spectral pyrometer is substantially the same as its measured physical temperature whereby said radiation temperature then represents the temperature of the gas.

In a preferred embodiment, the hot gases are the flue gases in fired furnaces. The system includes a black body placed on one side of the furnace and a spectral pyrometer viewing the black body from the opposite wall across the hot flue gas. A means for heating the black body and measuring its temperature independent of the pyrometer are included in the system. The temperature of the black body is increased until the physical temperature of the black body as measured by the independent means is the same as the radiation temperature read by the pyrometer through the flue gas. At this point, the temperature of the gas is necessarily the same as the temperature measured by the pyrometer.

The invention will now be more fully described, by way of an example, given with reference to the accompanying drawings, in which:—

Fig. 1 is a perspective view of a furnace with part of the furnace wall removed to show the interior;

Fig. 2 illustrates the components of the temperature measuring equipment in detail, and

Fig. 3 shows a plot of the spectral emissivity of flue gas from a pyrolysis furnace.

For the purposes of explanation, there will now be illustrated and described the monitoring of the bridgewall temperature of fired furnaces (the temperature of the flue gas at the transition zone between radiant and convection section). This involves the use of a pyrometer which reads the apparent temperature of a black body across the furnace, i.e., through the hot flue gas. The radiation received by the pyrometer consists of two components, the black body radiation, attenuated by absorption in the flue gas and radiative emission by the hot flue gas itself.

Gas absorptivity equals emissivity and the measured radiation temperature, $T_2$, can be related to the physical temperature of the black body $T_1$, the gas temperature $T_g$ and the gas emissivity (which equals absorptivity) $\alpha$, as

$$[\exp(h\nu/kT_2)-1]^{-1}=(1-\alpha)\ [\exp(h\nu/kT_1)-1]^{-1}$$

$$+\alpha[\exp(h\nu/kT_g)-1]^{-1}$$

where h is Planck's constant, k is Boltzmann's constant and v is the optical frequency of the spectral pyrometer. To obtain the gas temperature, $T_g$, one has to adjust the physical temperature of the black body $T_1$, until it equals the measured radiation temperature $T_2$. It then follows that if $T_1 = T_2$, then $T_1$ is also equal to $T_g$.

The equation above applies strictly to the case of uniform gas temperature and emissivity along the line connecting pyrometer and black body. In actual installations, the flue gas temperature varies across the furnace. In that case, the measured gas temperature represents a weighted average value. The gas temperature typically rises from some value near the refractory wall to a maximum in the centre and falls off again toward the opposite wall. The weighted average that results from the above measurement deviates somewhat from the (calculated) unweighted average. This deviation can be negative or positive depending on the value of $\alpha$. By selecting a proper wavelength band for the pyrometer, one can choose a value of $\alpha$ that minimises the averaging error.

If the gas is optically very dense, $(\alpha \sim 1)$, the black body radiation is essentially blocked, and the measured temperature is that of a portion of the flue gas closest to the pyrometer. At the other extreme of a very thin optical density $(\alpha \ll 1)$ the radiative contribution of the flue gas is negligible and the observed black body radiation is essentially uneffected by the flue gas. The spectral emissivity of flue gas is dominated by the absorption bands of hot $CO_2$ and $H_2O$ vapour, and exhibits strong variations with wavelength. The operating wavelength for the spectral pyrometer therefore should be chosen according to the absorption spectra of hot $CO_2$ and $H_2O$ vapour to yield a flue gas emissivity within the range of 0.1 to 0.9 at the chosen wavelength (wave number). A preferred value is about $1/e = 0.37$. Relevant spectra are available for instance from NASA publication SP-3080.

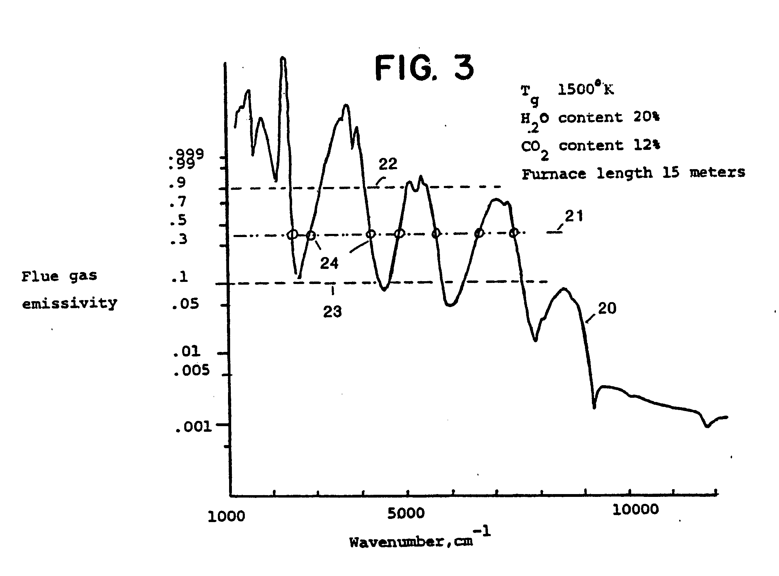

Fig. 3 shows a plot of flue gas emissivity as a function of wave number for the particular example of a pyrolysis furnace. Such furnaces are used throughout the petroleum industry. Preferably the narrow spectral receiving band of the pyrometers should be substantially centered at any one of the wavelengths corresponding to the intersects of the emissivity curve 20 with the 1/e emissivity line 21 as indicated by the open circles 24. Lines 22 and 23 correspond to the 0.1 and 0.9 emissivity values representing the limits for the useful range of operating wavelength.

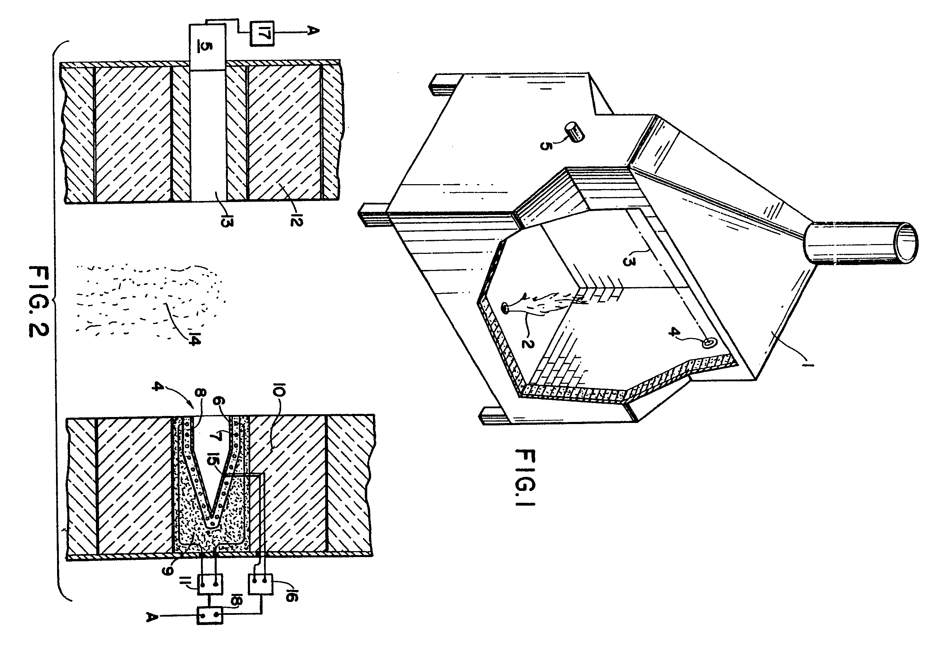

The black body as well as the spectral pyrometer can be constructed in a variety of different ways. Figure 1 illustrates a typical installation in accordance with the present invention. A typical furnace 1 is shown whose flames 2 produce flue gases whose temperature is to be measured along a line 3 through the furnace. A black body 4 is viewed along line 3 through the flue gases by a spectral pyrometer 5. The furnace wall interior is a refractory material such as brick 10 bounded by a steel wall 19.

A preferred design for the black body 4 is a hollow conical or cylindrical structure made from heavily oxidised and rough-surfaced furnace steel. This device is fixed to the furnace wall 10. Being fixed to the interior furnace wall 10 allows the black body to be heated radiatively and convectively by the hot flue gas and conductively by the refractory wall up to a temperature to within about 100 degrees below the gas temperature. In many practical cases, the black body may even approach about 10°C below the gas temperature. By providing additional heating, say via electrical heater elements, one can bring the black body temperature up to that of the gas as required. The temperature of the black body is measured independently of the pyrometer by, for example, a thermocouple or a resistance thermometer.

Figure 2 shows the components of a typical system in detail. The black body 4 consists of an inner shell of furnace steel 6 formed as a cone with cylindrical extension surrounded by a heating blanket, a Nichrome winding 7 embedded in heat-resistant cement 8. The black body is surrounded by a packing or kao-wool 9 for thermal insulation and placed into the refractory wall 10. The Nichrome windings 7 are connected to a controlled power supply 11. The spectral pyrometer 5 is positioned at the opposite furnace wall 12 viewing the black body through a hole 13 in the refractory wall 12 across the hot flue gas 14. The temperature of the black body 4, $T_1$, is measured by thermocouples 15 (or resistance thermometers) which are welded to the inner shell 6. The radiation received by the spectral pyrometer 5 is converted via the Planck formula into an equivalent temperature $T_2$. Digital signals proportional to $T_1$ and $T_2$ are generated in electronic units 16 and 17, respectively and sent to the digital comparator 18, which sends a control signal (proportional to the temperature difference $(T_2-T_1)$ to the power supply 11. As long as $T_1 < T_2$ the power supply 11 is activated such that current runs through the Nichrome windings 7 heating the black body 4 until $T_1 = T_2$. At that point $T_1$ is also equal to the gas temperature, $T_2$.

**Claims**

1. Apparatus for performing a temperature measurement on a hot gas, characterised by a black body (4) positioned to be in thermal contact with said gas, thermometer means (15) for measuring the physical temperature of said black body, a spectral pyrometer means (5) situated so as to be capable of viewing said black body thorough said gas for measuring the radiation temperature of said black body, electronic means (18) arranged for comparing the physical temperature of said black body us measured by said thermometer with the radiation temperature measured by said spectral pyrometer, and heating means (7) for adjusting the physical temperature of said black body until the measured physical and radiation temperatures are substantially the same, said radiation temperature then being representative of the temperature of the gas.

2. Apparatus according to claim 1, characterised in that said spectral pyrometer means (5) is arranged to operate at a wavelength where said gas has an emissivity within the range of 0.1 to 0.9.

3. Apparatus according to claim 1 or 2, characterised in that said black body (4) is a hollow cylindrical or conical cavity made from heavily oxidised furnace steel having a rough surface.

4. Apparatus according to any preceding claim and installed in a furnace for measuring the temperature of flue gas produced in said furnace, characterised in that said black body (4) is fixed to the interior furnace refractory wall (10) such that, in use, it is heated to within 100°C below the temperature of the flue gas.

5. Apparatus according to claim 3 or claim 4 as appended to claim 3, characterised in that said means for adjusting the temperature of said black body is an electrical heating element (7) in thermal contact with said steel cavity.

6. Apparatus according to any one of the preceding claims, characterised in that said thermometer means is a thermocouple (15).

7. Apparatus according to any one of claims 1 to 5, characterised in that said thermometer means is a resistance thermometer.

8. Apparatus according to any one of the preceding claims, characterised in that said spectral pyrometer (5) is arranged for operation at a wavelength where the hot gas emissivity is about $e^{-1}$.

9. A method for performing a temperature measurement on a hot gas characterised by:

(a) providing a black body in thermal contact with said gas;

(b) measuring the radiation temperature of said black body through the gas with a spectral pyrometer of a selected operating wavelength;

(c) measuring the physical temperature of the black body independent of said pyrometer; and

(d) heating the black body until its radiation temperature as measured with said spectral pyrometer is substantially the same as its measured physical temperature whereby said radiation temperature then represents the temperature of the gas.

10. A method according to claim 9, characterised in that the spectral pyrometer operates at a wavelength where said gas has an emissivity within the range 0.1 to 0.9.

**Patentansprüche**

1. Vorrichtung zur Durchführung einer Temperaturmessung bei einem heißen Gas, gekennzeichnet durch einen schwarzen Körper (4), der in Wärmekontakt mit dem Gas gebracht wird, ein Thermometer (15) zum Messen der physischen Temperatur des schwarzen Körpers, ein spektrales Pyrometer (5), das so angeordnet ist, daß es den schwarzen Körper durch das Gas betrachten kann, um die Strahlungstemperatur des schwarzen Körpers zu messen, durch eine Elektronikeinrichtung (18), die so angeordnet ist, daß sie die physische Temperatur des schwarzen Körpers gemäß Thermometer-Messung mit der Strahlungstemperaturmessung durch das Spektralpyrometer vergleicht, und durch eine Heizung (7) zur Einstellung der physischen Temperatur des schwarzen Körpers, bis die gemessene physische Temperatur und die Strahlungstemperatur im wesentlichen gleich sind, wobei die Strahlungstemperatur dann die Temperatur des Gases darstellt.

2. Vorrichtung nach Anspruch 1, dadurch gekennzeichnet, daß das Spektralpyrometer (5) angeordnet ist, um bei einer Wellenlänge zu arbeiten, bei der Gas ein Emissionsvermögen im Bereich von 0,1 bis 0,9 hat.

3. Vorrichtung nach Anspruch 1 oder 2, dadurch gekennzeichnet, daß der schwarze Körper (4) ein hohlzylindrischer oder konischer Hohlraum ist, der aus stark oxydiertem Ofenstahl mit einer rauhen Oberfläche besteht.

4. Vorrichtung nach einem der vorhergehenden Ansprüche, die in einen Ofen eingebaut ist, um die Temperatur des Rauchgases des Ofens zu messen, dadurch gekennzeichnet, daß der schwarze Körper (4) an der feuerfesten Innenwand (10) des Ofens derart angebracht ist, daß er im Betrieb bis auf 100°C unterhalb der Temperatur des Rauchgases erwärmt werden kann.

5. Vorrichtung nach Anspruch 3 oder 4 in Abhängigkeit von Anspruch 3, dadurch gekennzeichnet, daß das Mittel zum Einstellen der Temperatur des schwarzen Körpers ein elektrisches Heizelement (7) ist, das in thermischem Kontakt mit dem Stahlhohlraum steht.

6. Vorrichtung nach einem der vorhergehenden Ansprüche, dadurch gekennzeichnet, daß das Thermometer ein Thermoelement (15) ist.

7. Vorrichtung nach einem der Ansprüche 1 bis 5, dadurch gekennzeichnet, daß das Thermometer ein Widerstandsthermometer ist.

8. Vorrichtung nach einem der vorhergehenden Ansprüche, dadurch gekennzeichnet, daß das Spektralpyrometer (5) zum Betrieb bei einer Wellenlänge angeordnet ist, bei der das Emissionsvermögen des Heißgases etwa $e^{-1}$ beträgt.

9. Verfahren zur Durchführung einer Temperaturmessung an einem Heißgas, gekennzeichnet durch:

(a) Anordnen eines schwarzen Körpers in thermischem Kontakt mit dem Gas;

(b) Messen der Strahlungstemperatur des schwarzen Körpers durch das Gas hindurch mit einem Spektralpyrometer einer ausgewählten Betriebswellenlänge;

(c) Messen der physischen Temperatur des schwarzen Körpes unabhängig von dem Pyrometer; und

(d) Erwärmen des schwarzen Körpers, bis seine von dem Spektralpyrometer gemessene Strahlungstemperatur im wesentlichen gleich wie die gemessene physische Temperatur ist, so daß die Strahlungstemperatur dann die Temperatur des Gases darstellt.

10. Verfahren nach Anspruch 9, dadurch gekennzeichnet, daß das Spektralpyrometer bei einer Wellenlänge arbeitet, bei der das Gas ein Emissionsvermögen im Bereich von 0,1 bis 0,9 hat.

## Revendications

1. Appareil pour l'exécution d'une mesure de température dans un gaz chaud, caractérisé par un corps noir (4) disposé de manière à se trouver en contact thermique avec ledit gaz, un dispositif thermométrique (15) pour la mesure de la température physique dudit corps noir, un dispositif à pyromètre spectral (5) placé de manière à pouvoir viser le corps noir à travers ledit gaz pour mesurer la température de rayonnement dudit corps noir, un dispositif électronique (18) prévu pour comparer la température physique du corps noir, telle que mesurée par le thermomètre, à la température de rayonnement mesurée par le pyromètre spectral et un moyen de chauffage (7) pour régler la température physique du corps noir jusqu'à ce que les températures physique et de rayonnement soient sensiblement identiques, ladite température de rayonnement étant représentative de la température du gaz.

2. Appareil selon la revendication 1, caractérisé en ce que ledit dispositif à pyromètre spectral (5) est agencé pour fonctionner à une longueur d'onde à laquelle ledit gas possède une émissivité comprise dans la gamme de 0,1 à 0,9.

3. Appareil selon la revendication 1 ou 2, caractérisé en ce que ledit corps noir (4) est une cavité conique ou cylindrique creuse réalisée à partir de l'acier du four fortement oxydé à surface rugueuse.

4. Appareil selon l'une des revendications précédentes et monté dans un four pour la mesure de la température du gaz de combustion produit dans ledit four, caractérisé en ce que ledit corps noir (4) est logé dans la paroi réfracteire interne du four (10) de manière qu'à l'usage, il soit chauffé à 100°C au-dessous de la température du gaz de combustion.

5. Appareil selon la revendication 3 ou la revendication 4 rattachée à la revendication 3, caractérisé en ce que le dispositif pour le réglage de la température dudit corps noir est un élément chauffant électrique (7) en contact thermique avec la cavité en acier.

6. Appareil selon l'une quelconque des revendications précédentes, caractérisé en ce que ledit dispositif thermométrique est un thermocouple (15).

7. Appareil selon l'une quelconque des revendications 1 à 5, caractérisé en ce que ledit dispositif thermométrique est un thermomètre à résistance.

8. Appareil selon l'une quelconque des revendications précédentes, caractérisé en ce que le pyromètre spectral (5) est agencé pour fonctionner à une longueur d'onde à laquelle l'emissivité du gaz chaud est d'environ $e^{-1}$.

9. Un procédé pour l'exécution d'une mesure de température dans un gaz chaud, caractérisé par

a) la fourniture d'un corps noir en contact thermique avec ledit gaz;

b) la mesure de la température de rayonnement dudit corps noir à travers le gaz avec un pyromètre spectral opérant à une longueur d'onde sélectionnée;

c) la mesure de la température physique du corps noir, indépendamment du pyromètre et

d) le chauffage du corps noir jusqu'à ce que la température de rayonnement, telle que mesurée avec ledit pyromètre spectral, soit sensiblement identique à sa température physique mesurée, grâce à quoi la température de rayonnement représente alors la température du gaz.

10. Procédé selon la revendication 9, caractérisé en ce que le pyromètre spectral fonctionne à une longueur d'onde à laquelle ledit gaz possède une émissivité comprise dans la gamme de 0,1 à 0,9.

FIG.1

FIG. 2

1

FIG. 3

$T_g$ 1500°K
$H_2O$ content 20%
$CO_2$ content 12%
Furnace length 15 meters

Flue gas emissivity

Wavenumber, cm$^{-1}$